# EUROPEAN PATENT APPLICATION

(11) **EP 2 073 111 A2**
(43) Date of publication of application: **24.06.2009**
(21) Application number: 08171927.0
(22) Date of filing: 17.12.2008
(51) Int. Cl.: G06F 3/048

(54) **Apparatus and method for menu navigation**

(30) Priority: 17.12.2007 KR 20070132409
(71) Applicant: Samsung Electronics Co., Ltd., Suwon-si, Gyeonggi-Do (KR)
(72) Inventor: Ha, Kwang-soo, Dongjak-gu Seoul (KR); Kim, Hee-yul, Gyeonggi-do (KR); Lee, Son-young, Dongdae-gu Seoul (KR); Jung, Hye-heon 501-1614, Woosung 5th Apartment, Seoul (KR)
(74) Representative: Walaski, Jan Filip

(57) **Abstract**

An image forming apparatus to provide visual feedback in response to a manipulation of a navigation key includes a display panel unit, a navigation key which is selectable and rotatable, to perform a menu navigation over the display panel unit according to at least one of a selection and a rotation thereof, a state indicating unit to operate in a display pattern to correspond to a manipulation state of the navigation key, and a control unit to control the state indicating unit according to the manipulation state of the navigation key. As a result, a direct, instant, and visual feedback is provided.

## Description

The present invention relates to an apparatus and method for menu navigation.

The development of electronic technology has brought about diversification of image forming apparatuses such as printers, scanners, copiers, or facsimiles, and also the convergence of the individual functions of the image forming apparatuses, such as the multi-function unit (MFU) that integrates at least two individual functions of a printer, scanner, copier and facsimile.

A user may want to use an image forming apparatus such as an MFU or a printer, i) to output an original document written on a connected computer, ii) to copy or scan a document by manipulating a control panel in front of the image forming apparatus, and iii) to receive an external fax transmission and output the received fax. In such circumstances, the image forming apparatus provides the user with feedback so that the user can check if the user presses the right button, or recognizes the current condition of the image forming apparatus.

A conventional image forming apparatus provides the feedback in a form of a cursor movement or a text displayed in a liquid crystal display (LCD) region.

However, in the image forming apparatus, the LCD region is generally provided at a separate location from a navigation key. Accordingly, the user needs to check a separate location of the image forming apparatus for feedback, and on occasion, also has to check the LCD region, while manipulating the navigation key, which is inconvenient.

Furthermore, the conventional image forming apparatus provides a minimum feedback in response to the user's input, which is frequently incomprehensible to the user.

The above problems are not limited to the image forming apparatus. That is, most devices that have menu navigation and feedback function are equally affected by the same problems. Therefore, a more integrated form of a control panel, and a more directive and responsive feedback to the user's input, are required.

The present invention provides an input panel apparatus to provide effective and visual feedback, an image forming apparatus using the same, and a method of using the same.

Additional aspects and utilities of the present invention will be set forth in part in the description which follows and, in part, will be obvious from the description, or may be learned by practice of the invention.

According to the invention there is provided apparatus comprising a navigation key which is selectable and/or rotatable to navigate a menu, and a state indicating unit around the navigation key, the state indicating unit being arranged to provide a display pattern that corresponds to a manipulation state of the navigation key.

The foregoing and other aspects and utilities of the present invention may be achieved by providing an image forming apparatus including a display panel unit, a navigation key which is selectable and rotatable, and to perform a menu navigation over the display panel unit according to at least one of a selection and a rotation thereof, a state indicating unit to operate in a display pattern to correspond to a manipulation state of the navigation key, and a control unit to control the state indicating unit according to the manipulation state of the navigation key.

The control unit may control the state indicating unit to provide a feedback in response to the manipulation of the navigation key.

The state indicating unit may include a plurality of light emitting elements arranged around an edge of the navigation key.

The control unit determines whether a portion of the navigation key is selected and determines a rotation range of the navigation key, to adjust a menu display state of the display panel unit, to determine a display pattern of the state indicating unit, and to control the state indicating unit to operate according to the determined display pattern.

The control unit may select a display pattern according to a key selection of the navigation key, or a rotation range of the navigation key, to turn on at least one of a plurality of light emitting element (LED) in accordance with the selection or the rotation range of the navigation key, or to turn on or off the plurality of LEDs in sequence in a predetermined direction, or to turn on or off the plurality of LEDs concurrently, or to turn on the plurality of LEDs concurrently and turn off the plurality of LEDs concurrently in an alternate manner.

The navigation key may include a one or more push areas for a user to press, which is provided on at least a portion of the navigation key, and wherein the control unit determines a display pattern of the state indicating unit according to a key selection of the navigation key, a rotation range of the navigation key, and a pressing of the push area.

The control unit may determine a display pattern of the state indicating unit according to the state of the image forming apparatus, to turn on and off all of the plurality of LEDs in sequence, or to turn on the plurality of LEDs concurrently, or to repeat turning on the plurality of LEDs concurrently and turning off the plurality of LEDs concurrently in an alternate manner, or to change a display colour.

The state of the image forming apparatus may include at least one of a power on/off state, a ready state, a power save mode, a facsimile transmission/reception state, a data transmission/reception state, a mail transmission/reception state, a printing state, and an error state.

The foregoing and other aspects and utilities of the present invention may be achieved by providing an input panel apparatus including a navigation key which is selectable and rotatable, and to perform a menu navigation according to at least one of a key selection and a rotation range, the navigation key having one or more push areas provided on at least one portion thereof, and a state indicating unit comprising a plurality of light emitting elements (LED) arranged along an edge of the navigation key, to operate in a display pattern in accordance with a manipulation of the navigation key.

The state indicating unit may provide a feedback in response to the manipulation of the navigation key.

The state indicating unit may operate selectively according to the key selection and the rotation range of the navigation key, to turn on at least one LED that corresponds to the key selection or the rotation range of the navigation key, or to turn on the LEDs in sequence and to turn off the LEDs in sequence in a predetermined direction, or to turn on or off the LEDs concurrently, or to repeat turning on the LEDs concurrently and turning off the LEDs concurrently in an alternate manner, or to change a display colour.

The above method for providing a feedback in response to a user manipulation may further include determining a state of the image forming apparatus, and determining the display pattern according to the state of the image forming apparatus, to turn on all of the plurality of LEDs in sequence and turn off all the LEDs in sequence, or to turn on the LEDs concurrently, or to repeat turning on the LEDS concurrently and turning off the LEDs concurrently in an alternate manner, or to change a display colour.

The state of the image forming apparatus may include at least one of a power on/off state, a ready state, a power save mode, a facsimile transmission/reception state, a data transmission/reception state, a mail transmission/reception state, a printing state, and an error state.

These and/or other aspects and utilities of the present invention will become apparent and more readily appreciated from the following description of the embodiments, taken in conjunction with the accompanying drawings, in which:
FIG. 1 is a block diagram illustrating an image forming apparatus according to an example embodiment of the present invention;
FIGS. 2A to 2D illustrate a navigation key and a state indicating unit according to various example embodiments of the present invention;
FIGS. 3A and 3B illustrate a structure of a control panel according to an example embodiment of the present invention;
FIGS. 4 to 14 illustrate various display patterns appearing in response to user manipulations; and
FIG. 15 is a flowchart to illustrate a method to provide a feedback in response to a user manipulation according to an example embodiment of the present invention.

Reference will now be made in detail to embodiments of the present invention, examples of which are illustrated in the accompanying drawings, wherein like reference numerals refer to the like elements throughout. The embodiments are described below in order to explain the present invention by referring to the figures.

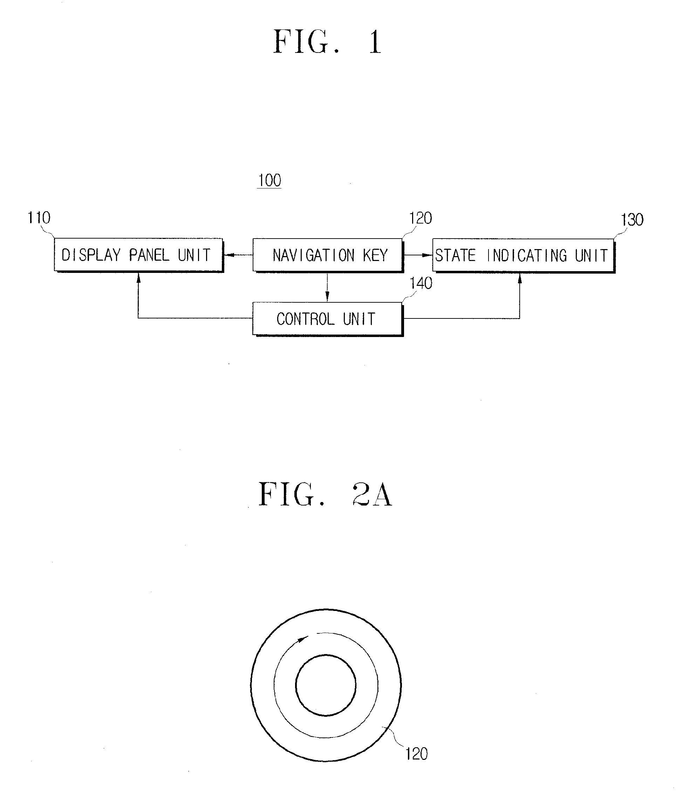

FIG. 1 is a block diagram illustrating an image forming apparatus according to an example embodiment of the present invention.

Referring to FIG. 1, the image forming apparatus 100 includes a display panel unit 110, a navigation key 120, a state indicating unit 130, and a control unit 140. The image forming apparatus 100 may be implemented according to example embodiments of the present invention. For example, the image forming apparatus 100 may be a multi-function unit (MFU) to integrate at least two functions from functions of a printer, scanner, copier and facsimile machine.

The display panel unit 110 displays a menu of a variety of functions supported by the image forming apparatus 100, and other messages.

The display panel unit 110 may be implemented as a liquid crystal display (LCD). Alternatively, the display panel unit 110 may be implemented as a cathode-ray tube (CRT), plasma display panel (PDP), or organic light emitting diodes (OLED).

The navigation key 120 helps the user navigate the menu on the display panel unit 110. The navigation key 120 may be variably implemented. For example, the navigation key 120 may be a multi-direction selectable key such as a four-direction key, a 360° rotary wheel, a jog shuttle, or a jog dial.

If the navigation key 120 is implemented as a rotary key, the user navigates the menu according to various angles of rotation of the navigation key 120.

The navigation key 120 may further include a select key to select the menu reached as a result of the navigation.

The state indicating unit 130 operates a display pattern to correspond to the manipulation on the navigation key 120, to provide feedback in return.

Specifically, the state indicating unit 130 may be implemented as a plurality of light emitting elements arranged around an edge of the navigation key. The light emitting elements may be LEDs and this example will be explained below for convenience of explanation, to describe the present embodiment. However, the use of light emitting elements other than LEDs is also envisaged.

The plurality of LEDs of the state indicating unit 130 may be arranged at predetermined intervals outside or inside of an edge of the navigation key 120. For example, the LEDs may be in an arrangement to correspond to vertices of a square or polygon. Alternatively, a transparent sheet (not illustrated) may be arranged over the LED module to express a plurality of LEDs continuously, that is, without boundaries of light.

FIGS. 2A to 2D illustrate the navigation key 120, the state indicating unit 130, and the input panel apparatus incorporating the navigation key 120 and the state indicating unit 130, according to various example embodiments of the present invention.

Referring to FIG. 2A, the navigation key 120 is formed to rotate in an arrowed (clockwise) direction, or if necessary, the navigation key 120 may rotate in an opposite (counter-clockwise) direction.

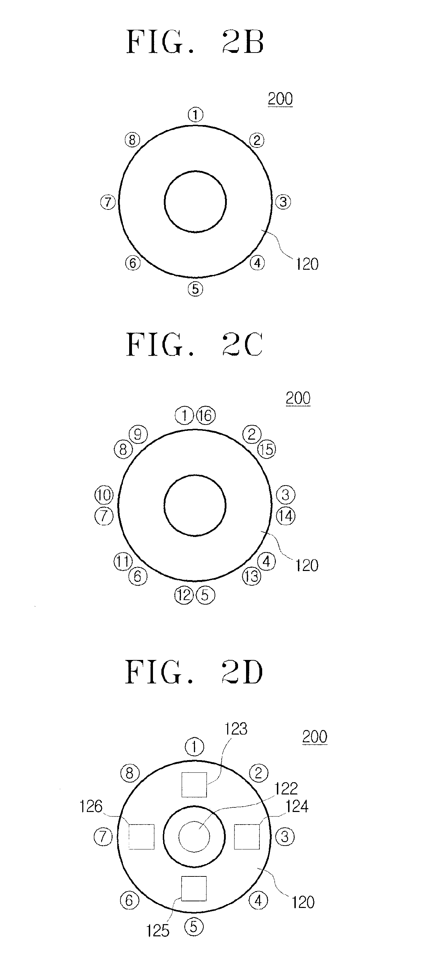

FIGS. 2B to 2D particularly illustrate the navigation key 120, and the input panel apparatus 200 including a plurality of LEDs.

Referring to FIG. 2B, a plurality of LEDs #1 to #8 is arranged along the edge of the navigation key 120. The LEDs (#1 to #8) are at predetermined intervals, and provided in an arrangement to correspond to vertices of an octagon according to an example embodiment of the present invention.

Referring to FIG. 2C, eight pairs of LEDs #1 to #16 may be arranged along the edge of the navigation key 120. The two LEDs in one pair may have different colours from each other.

If two LEDs (#1 and #16) of different colours are combined in a pair, the resultant display pattern can express two or more colours. For example, if one #1 to #8 in each pair of the LEDs has a red colour and the other LEDs #9 to #16 in each pair has a blue colour, the red LEDs, or the blue LEDs may be used exclusively or in combination. As a result, red, blue, or pink display patterns appear depending on the use of LEDs.

The LEDs #1 to #16 may be used to distinctively represent each state of the image forming apparatus 100, such as a normal operation, error, or warning. For example, the blue LEDs may exclusively be used to represent the normal operation of the image forming apparatus 100. The red LEDs may exclusively be used to represent that an error has occurred, if toner is depleted, paper is jammed, paper is depleted, or a cover is open. The blue and red LEDs may also be used in combination to represent a pink colour, if the image forming apparatus enters a warning state, that is, if a remaining amount of toner is low, or if paper mismatching has occurred.

While the above example embodiment illustrates that the two LEDs are arranged at the same location, other examples may be employed. For example, the LEDs of three or more colours may be arranged in the same location.

Referring to FIG. 2D, the navigation key 120 may include at least a portion designated as push areas 122, 123, 124, 125, 126 (or select keys). For example, according to one example embodiment of the present invention, up, down, left and right push areas 123 to 126, and one center push area 122, are provided. The center push area 122 may be used to select the menu reached as a result of navigation. However, this is only for the purpose of illustration, and the number and location of the push areas may vary according to occasions.

The control unit 140 (FIG. 1) determines a rotation range of the navigation key 120, and the selection of the push areas 122 to 126, to adjust the menu display state of the display panel unit 110.

The control unit 140 also determines the display pattern of the state indicating unit 130; and controls the state indicating unit 130 to operate according to the determined display pattern.

The control unit 140 may determine a display pattern of the state indicating unit 130 according to the rotation range of the navigation key 120 to turn on at least one LED that corresponds to the rotation range of the navigation key 120; to turn on a plurality of LEDs in sequence and to turn off the LEDs in sequence, in one direction; to turn on or off all of a plurality of LEDs concurrently; or to turn on a plurality of LEDs concurrently and to turn off a plurality of LEDs concurrently, in an alternate manner.

The control unit 140 may determine the display pattern of the state indicating unit 130, according to the rotation range of the navigation key 120, and whether the push areas are pressed.

Specifically, if one of the push areas of the navigation key 120 is pressed, the control unit 140 may cause an LED arranged at a location corresponding to the pressed push area, to be turned on.

If the navigation key 120 is rotated while the push area of the navigation key 120 is being pressed, the control unit 140 may control the state indicating unit 130 to turn on the LEDs which are arranged at locations that correspond to the range covered by the rotation of the navigation key 120.

The navigation key 120 may be implemented in a dial form which is rotatable and which does not require a user to press, in which case the user may rotate the navigation key 120 with a respective fingertip or finger(s). In this case, the control unit 140 may control the state indicating unit 130 to sequentially turn on the LEDs in the rotating direction of the navigation key 120.

If a predetermined area 122 of the push areas of the navigation key 120 is pressed, and more specifically, if a key area corresponding to a confirm or select button is pressed, the control unit 140 may control the state indicating unit 130 to operate in a display pattern to turn on or off a plurality of LEDs in sequence; to turn on a plurality of LEDs concurrently; or to turn on all of a plurality of LEDs concurrently and turn off all of a plurality of LEDs concurrently, in an alternate manner.

The control unit 140 may determine the display pattern of the state indicating unit 130 according to the state of the image forming apparatus, to turn on a plurality of LEDs in sequence and to turn off a plurality of LEDs in sequence; to turn on all of a plurality of LEDs concurrently; to turn on all of a plurality of LEDs concurrently and to turn off all of a plurality of LEDs concurrently, in an alternate manner; or to change a display colour.

The state of the image forming apparatus may include at least one of a power on/off state, ready state, power save mode, fax transmission/reception, data transmission/reception, mail transmission/reception, printing, and error.

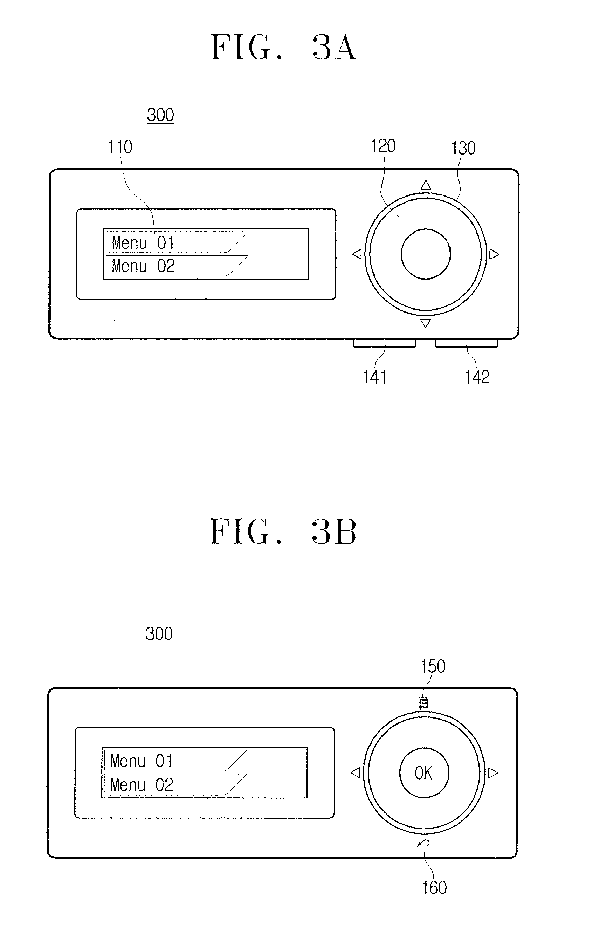

FIGS. 3A and 3B illustrate a structure of the control panel 300 which includes the display panel unit 110, the navigation key 120, and the state indicating unit 130.

The control panel 300 illustrated in FIGS. 3A and 3B is applicable to any device that has a menu navigation function and a feedback function, as well as the image forming apparatus 100 according to the present invention.

Referring to FIG. 3A, the display panel unit 110 and the navigation key 120 integrating the state indicating unit 130, are arranged next to the control panel 300 on left and right sides, respectively. The screen of the display panel unit 110 is divided into two menu lines, but this is only for the exemplary illustration. For example, the screen may be divided into three or more menu lines. Along the edge of the navigation key 120, a plurality of LEDs of the state indicating unit 130 are arranged. The predetermined push areas (▲,▼,◄,►) are formed on an outer side of the state indicating unit 130. That is, the push areas of the navigation key 120 are mapped to direction changing functions, in which case separate keys may be provided as a menu key 141 and a back key 142.

If the left and right push areas alone are used for the navigation, referring to FIG. 3B, upper and lower push areas may be mapped to a menu function 150 and a back function 160.

The display pattern, which is variably indicated on the state indicating unit 130 according to the manipulation of the navigation key 120 and the state of the image forming apparatus 100, will be explained below with reference to various example embodiments of the present invention. For convenience of explanation, the image forming apparatus 100 is assumed to be in a ready state as the initial state in the following embodiments. Also referring to the drawings, the LEDs in an on state is indicated in a hashed circle, while the LEDs in an off state is indicated in an empty circle. Also for convenience of explanation, the following embodiment employs eight LEDs as a plurality of LEDs, each of which is numbered in sequence from #1 to #8.

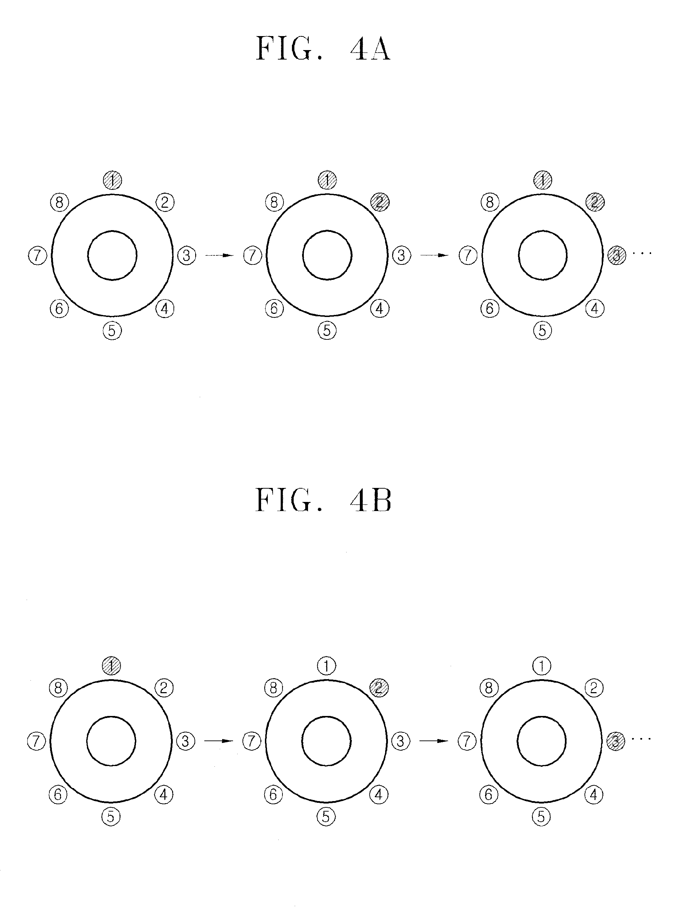

FIGS. 4A and 4B illustrate display patterns appearing on the state indicating unit 130 according to the rotational movement of the navigation key 120.

If the navigation key 120 is rotated clockwise, the state indicating unit 130 may display the LEDs turning on in sequence, to correspond to the rotation of the navigation key 120 (FIG. 4A), or display the LEDs turning on and off in sequence, to correspond to the rotation of the navigation key 120 (FIG. 4B).

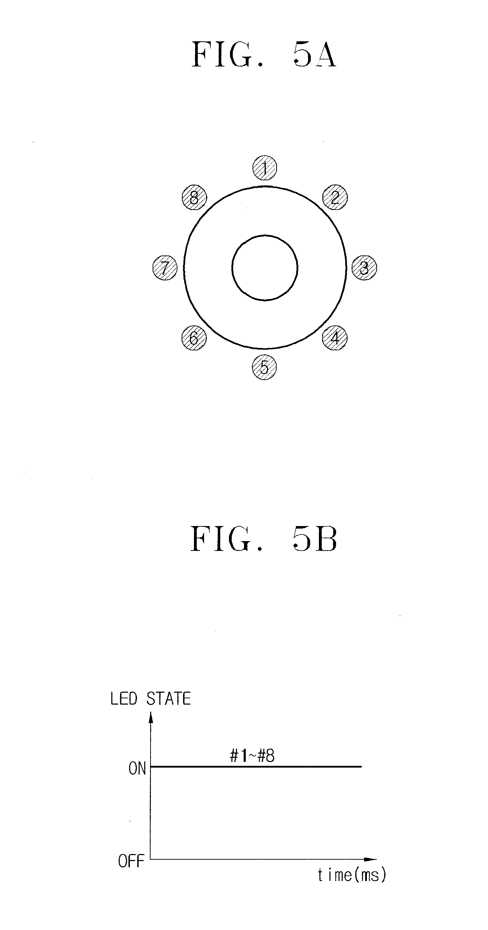

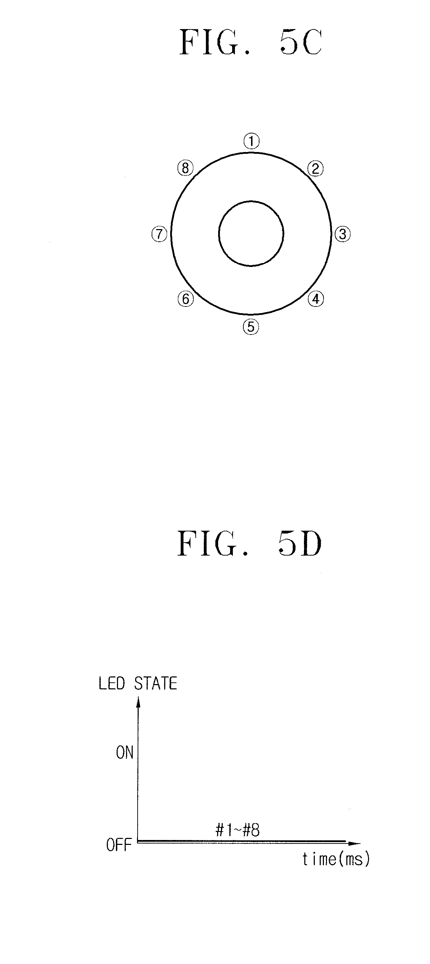

FIGS. 5A and 5B illustrate the display pattern of the state indicating unit 130 if the image forming apparatus 100 is in the ready state, and FIGS. 5C and 5D illustrate the display pattern of the state indicating unit 130 if the image forming apparatus 100 remains in the ready state longer than a predetermined time.

Referring to FIG. 5A, if the image forming apparatus 100 is in ready state, the plurality of LEDs #1 to #8 of the state indicating unit 130 are in the on state, thereby visually indicating that the image forming apparatus 100 is ready for operation.

FIG. 5B is a graphical representation of a plurality of LEDs #1 to #8 in the on/off states. Referring to FIG. 5B, a plurality of LEDs #1 to #8 are in on state.

Referring to FIG. 5C, if the image forming apparatus 100 stays in a ready state (FIGS. 5A and 5B) longer than a predetermined time period, that is, if the image forming apparatus 100 is not used for the predetermined time period, the plurality of LEDs #1 to #8 of the state indicating unit 130 may stay in the off state. Alternatively, the LEDs #1 to #8 may stay in the on state but with dimmer lighting. Alternatively, the LEDs #1 to #8 may stay in the on state but with gradually dimming lighting.

Referring to FIG. 5D, the LEDs #1 to #8 stay in the off state.

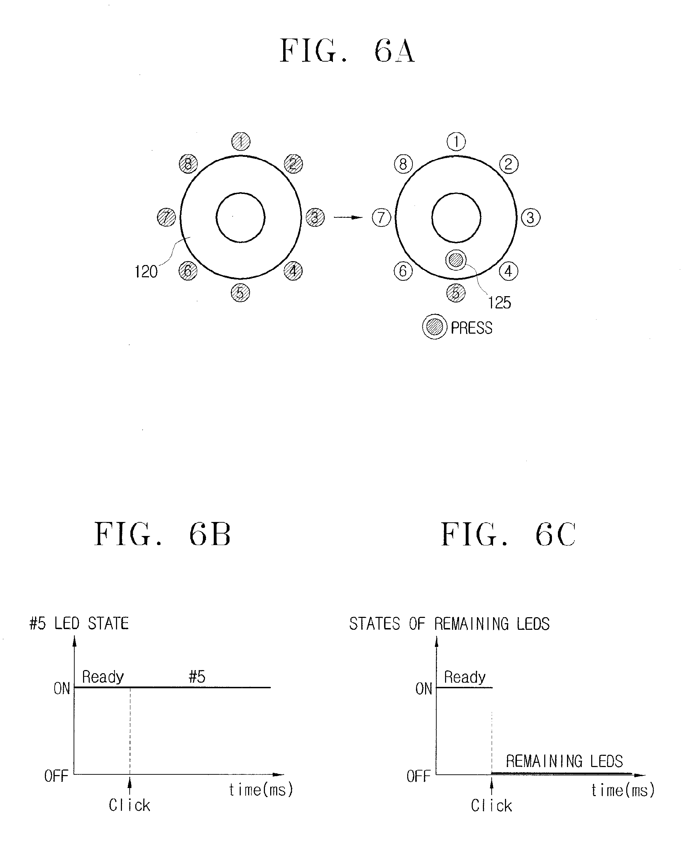

FIGS. 6A to 6C illustrate display patterns of the state indicating unit 130 appearing according to the pressing on a specific area 125 of the navigation key 120.

Referring to FIGS. 1 and 6A, if the image forming apparatus 100 is in the ready state (identical to the state of FIG. 4A), the LEDs #1 to #8 of the state indicating unit 130 are all in on state. Then in response to the pressing on a specific area of the navigation key 120, only the LED #5 that corresponds to the pressed area remains in the on state, while the other LEDs #1 to #4 and #6 to #8 are turned to the off state.

FIG. 6B illustrates the LEDs #1 to #8 changing to the off state, while LED #5 alone remains in the on state in response to the pressing on the corresponding area.

FIG. 6C illustrate the other LEDs #1 to #4 and #6 to #8 in the off state.

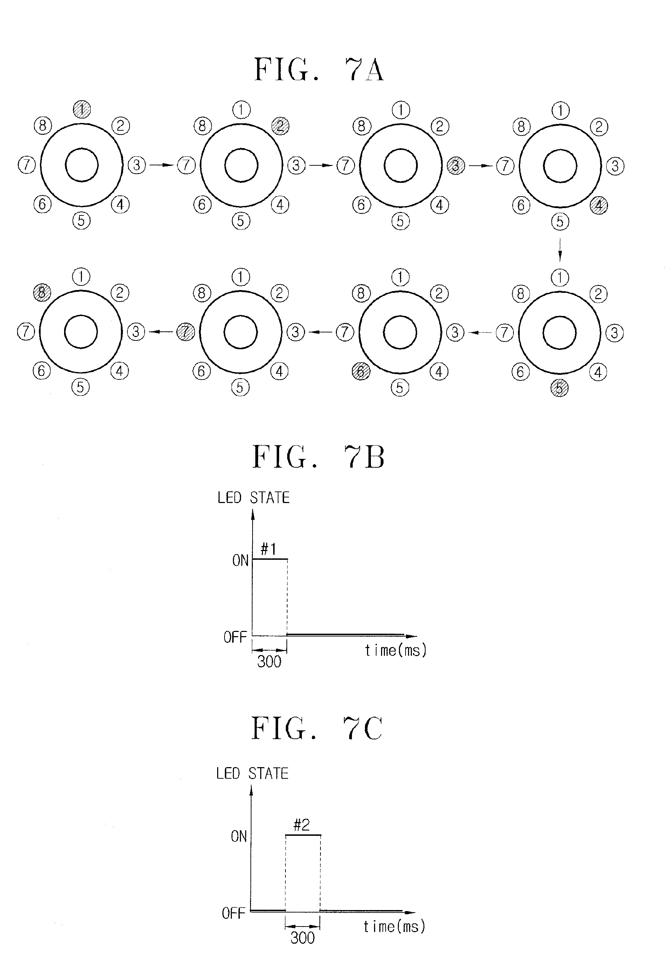

FIGS. 7A to 7D illustrate display patterns of the state indicating unit 130 appearing in response to the power-on of the image forming apparatus 100, according to the user manipulation.

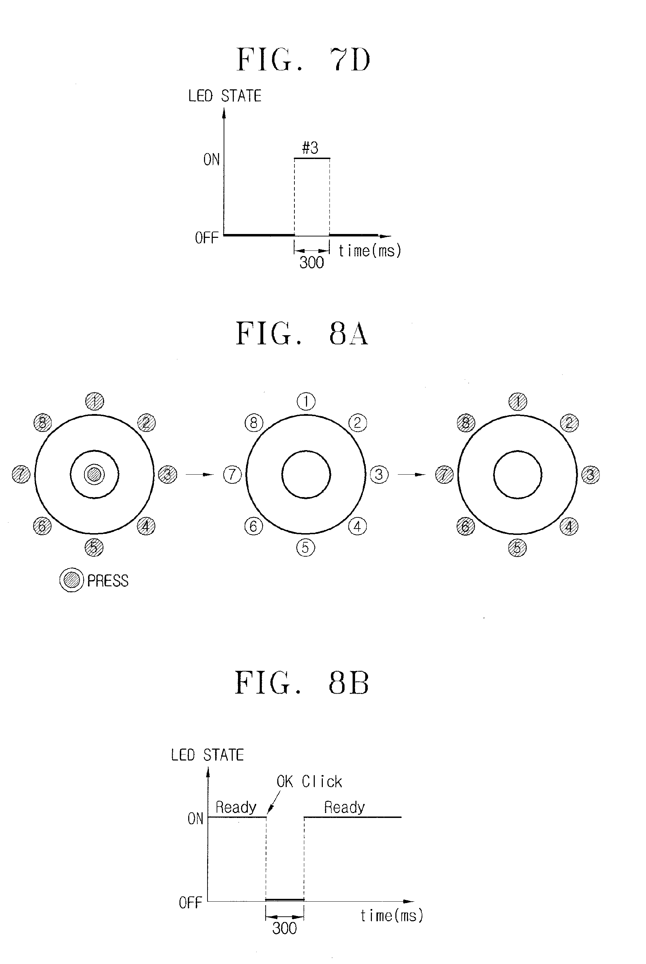

Referring to FIGS. 1 and 7A, in response to a power-on of the image forming apparatus 100 by the user manipulation which is input, for example, through a separate power key (not illustrated), the LEDs #1 to #8 are turned on and off in sequence in a clockwise or counter-clockwise direction, thereby providing a visual effect as if the lights of the LEDs #1 to #8 rotate. Such a display pattern continues until the image forming apparatus 100 reaches the ready state. Referring to FIGS. 7B and 7D, the LED #1 is turned on and then turned off as the next LED #2 is turned on. The LED #2 is turned off as the LED #3 is turned on, the LED #3 is turned off as the LED #4 is turned on, and so on.

If the image forming apparatus 100 is changed from the state of FIG. 5A to the state of FIG. 4A, that is, if the image forming apparatus 100 remains in the ready state for a predetermined time period so that the LEDs #1 to #8 are in the off state or in the on state with dimmer lighting, the LEDs #1 to #8 may have the display pattern illustrated in FIG. 7A as the image forming apparatus 100 is changed to the ready state.

Referring to FIG. 7B, the LED #1 stays on for a predetermined time period (300 ms, for example) and turns to off state in response to the turning-on of the LED #2, and the LED #2 staying in the on state for a predetermined time period (300 ms, for example) and turns to the off state in response to the turning-on of the LED #3, and so on.

FIGS. 8A and 8B illustrate display patterns of the state indicating unit 130 (FIG. 1) appearing in response to a selection of a certain menu by the user manipulation.

Referring to FIGS. 1 and 8A, the plurality of LEDs #1 to #8 may operate in a display pattern in which the LEDs #1 to #8 are turned off concurrently and turned on concurrently, in response to a user manipulation during a menu navigation, such as when the user presses a predetermined push area 122 (FIG. 2D) or presses a separate select key (not illustrated). The LEDs #1 to #8 may operate in this display pattern in response to mounting or demounting of the USB.

Referring to FIG. 8B, the LEDs #1 to #8 are turned off concurrently, stay in the off state for a predetermined time period (300ms, for example), and turned on concurrently.

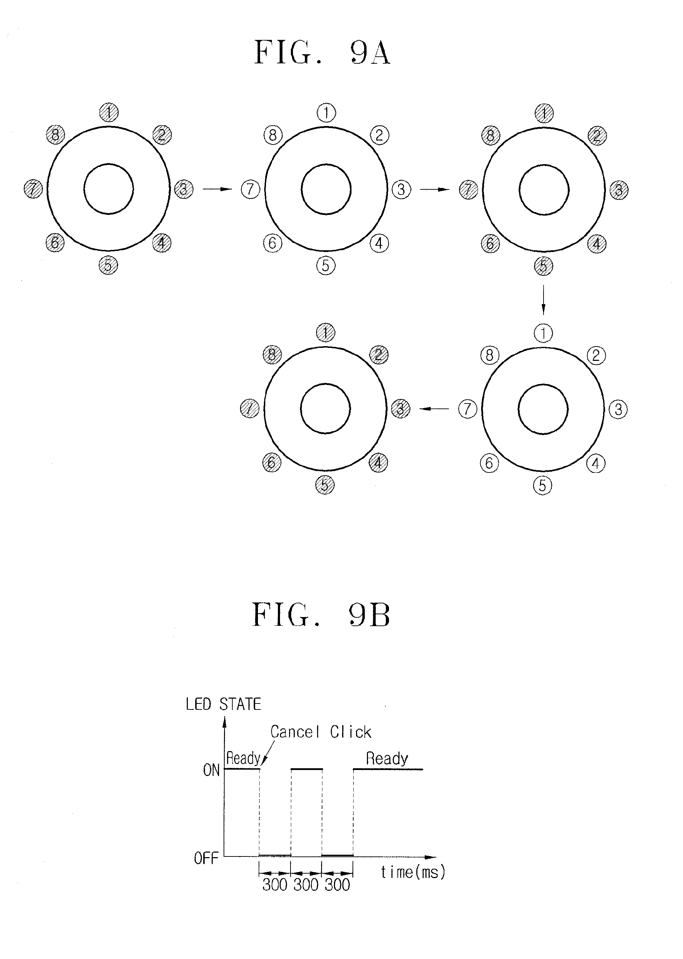

FIGS. 9A and 9B illustrate display patterns of the state indicating unit 130 appearing in response to a user manipulation to cancel a menu selection.

Referring to FIG. 9A, in response to a cancellation of a menu selection by a user's manipulation, for example, by a user's pressing on a separate cancel key (not illustrated), the LEDs #1 to #8 operate in a pattern to repeat turning on concurrently and turning off concurrently, before entering the ready state (FIG. 4A).

Referring to FIG. 9B, the LEDs #1 to #8 repeat the process of turning off concurrently, staying in the off state for a predetermined time (300ms, for example), and turning on concurrently.

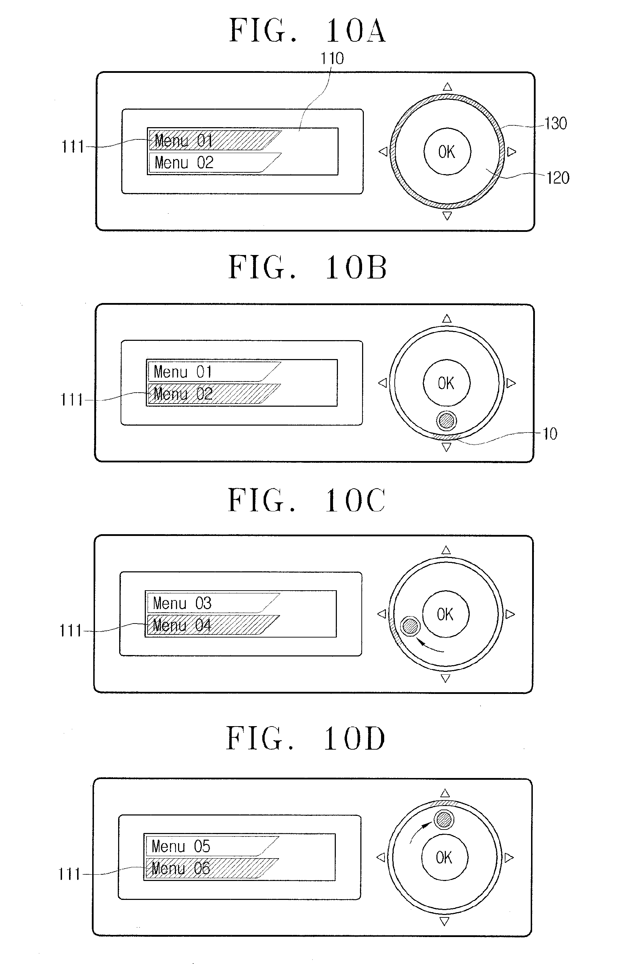

FIGS. 10A to 10G illustrate display patterns of the state indicating unit 130 appearing in response to the menu navigation and menu selection.

Referring to FIGS. 1 and 10A, if the image forming apparatus 100 is in the read state, all the LEDs 130 arranged along the edge of the navigation key 120 are turned on concurrently to give a visual effect as if the edge of the navigation key 120 is lighted in circle.

If the user presses a separate menu key (not illustrated), the display panel unit 110 displays a menu screen, in which a cursor 111 to select the menu is placed on the first menu of the top menus.

Referring to FIGS. 1 and 10B, in response to a pressing on a push area 125 (FIG. 2D) arranged below the navigation key 120, among the LEDs located outside the navigation key 120, the LED corresponding to the pressed area 125 (FIG. 2D) is turned on alone, while the other LEDs are turned off. The cursor 111 is moved to the next menu on the screen of the display panel unit 110.

Referring to FIGS. 1 and 10C, if a user rotates the navigation key 120 clockwise, and keeps pressing the push area 125 (FIG. 2D) arranged below, only the LED that corresponds to the moving key 120 is turned on, while the other LEDs staying in the off state. As a result, a visual effect is obtained, as if the LEDs are moving from the bottom to the top in clockwise direction. The cursor 111 on the screen of the display panel unit 110 is moved to the next menu according to a rotation speed.

Referring to FIGS. 1 and 10D, if the navigation key 120 stops rotating, the cursor 111 on the screen of the display panel unit 110 also stops moving among the menus.

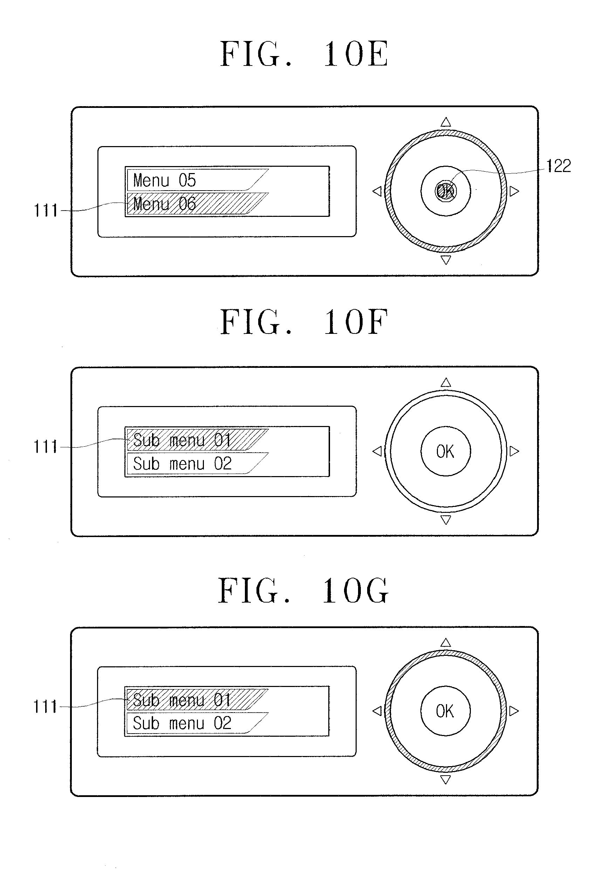

Referring to FIGS. 1, 10E and 10F, if a user presses a predetermined push area 122 at a center of the navigation key 120, while the cursor 111 is pointing at a specific menu displayed on the screen of the display panel unit 110, the LEDs arranged outside the edge of the navigation key 120 are turned on concurrently and then turned off concurrently to thus provide a visual feedback that the menu is selected. Accordingly, the display panel unit 110 displays a sub-menu of the selected menu. While the above embodiment explained that the menu is selected in response to pressing on a predetermined push area 122, other examples are also possible. For example, a user may select a certain menu pointed by the cursor 111, by depressing a predetermined area of the navigation key 120 (FIG. 1).

Referring to FIG. 10G, as the sub-menu appears, the LEDs are turned on concurrently and maintain the on state. In this situation, the same operation as explained above with reference to FIGS. 10A to 10F are performed according to the user's manipulation of the navigation key 120.

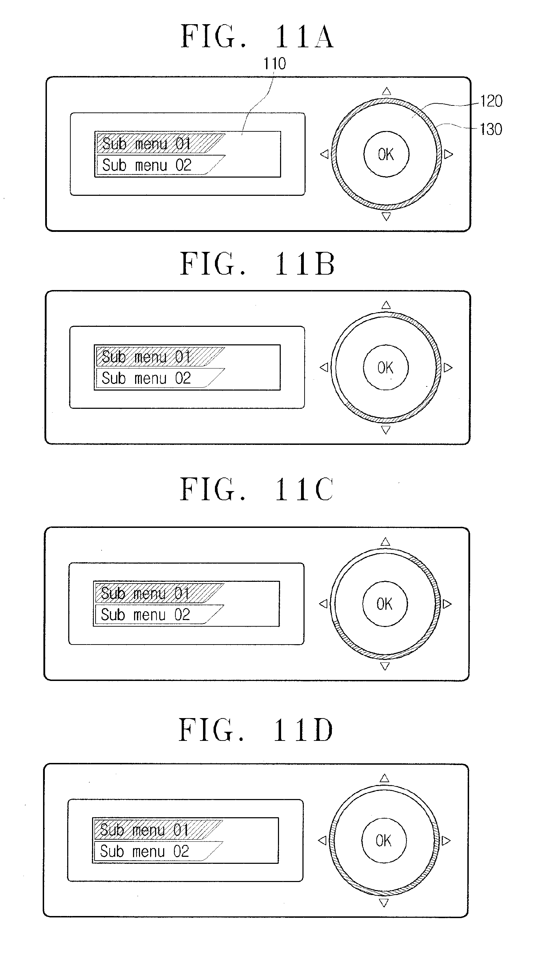

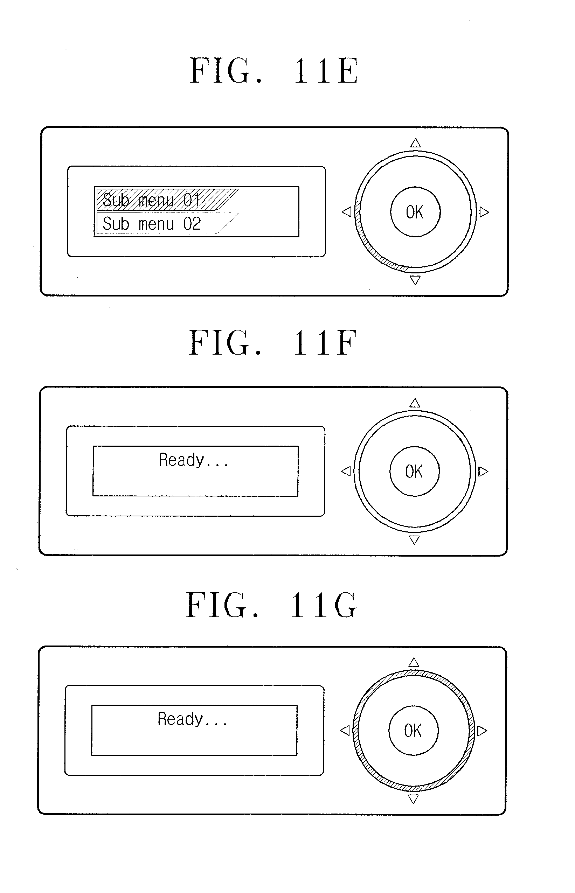

FIGS. 11A to 11G illustrate display patterns of the state indicating unit 130 appearing in response to a menu navigation and a cancellation of the menu navigation.

Referring to FIG. 11A, in a state that the sub-menu is displayed, all the LEDs are in the on state.

Referring to FIGS. 11B to 11E, in response to a user's pressing on a separate cancel key (not illustrated), or user's other equivalent manipulation to cancel the menu navigation, the LEDs arranged outside the edge of the navigation key 120 start to turn off in turn, in a predetermined direction (leftward direction, for example).

Referring to FIG. 11F, if all the LEDs 130 are turned off, the display panel unit 110 changes the menu screen to a standby screen.

Referring to FIG. 11G, all the LEDs 130 are turned on again, thereby visually indicating that the image forming apparatus 100 is in the ready state.

If the image forming apparatus 100 (FIG. 1) has performed a certain operation for a predetermined time period, the LEDs may operate according to a predetermined display pattern.

An example where the image forming apparatus 100 is carrying out a user's command to output, and an example where the image forming apparatus 100 is in data reception, and an example where the image forming apparatus 100 is in facsimile reception, will be explained below.

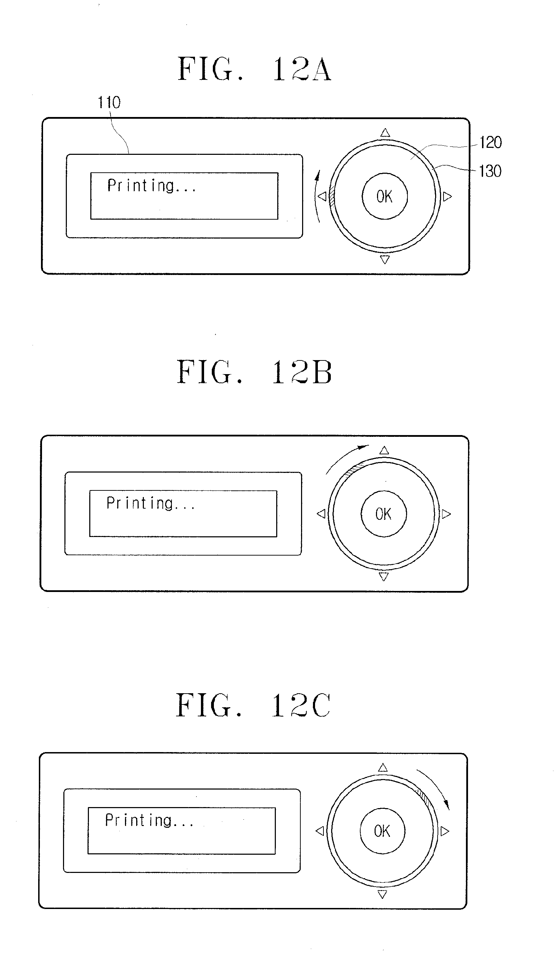

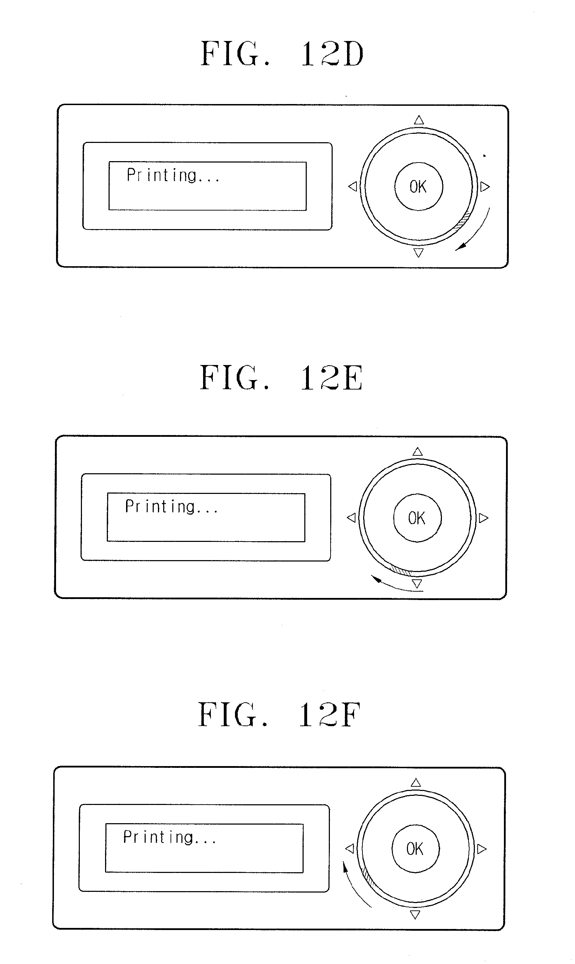

FIGS. 12A to 12G illustrate display patterns of the state indicating unit 130 appearing while the image forming apparatus 100 (FIG. 1) is carrying out a user's command to output.

Referring to FIGS. 12A to 12G, while the image forming apparatus 100 is operating in output mode, the LEDs 130 arranged along the edge of the navigation key 120 may be turned on and off, one at a time, in a predetermined direction, thereby giving a visual effect as if the light of the LEDs rotates. In this situation, the display panel unit 110 outputs a 'printing' message. Such a display pattern continues until the image forming apparatus 100 finishes the corresponding operation.

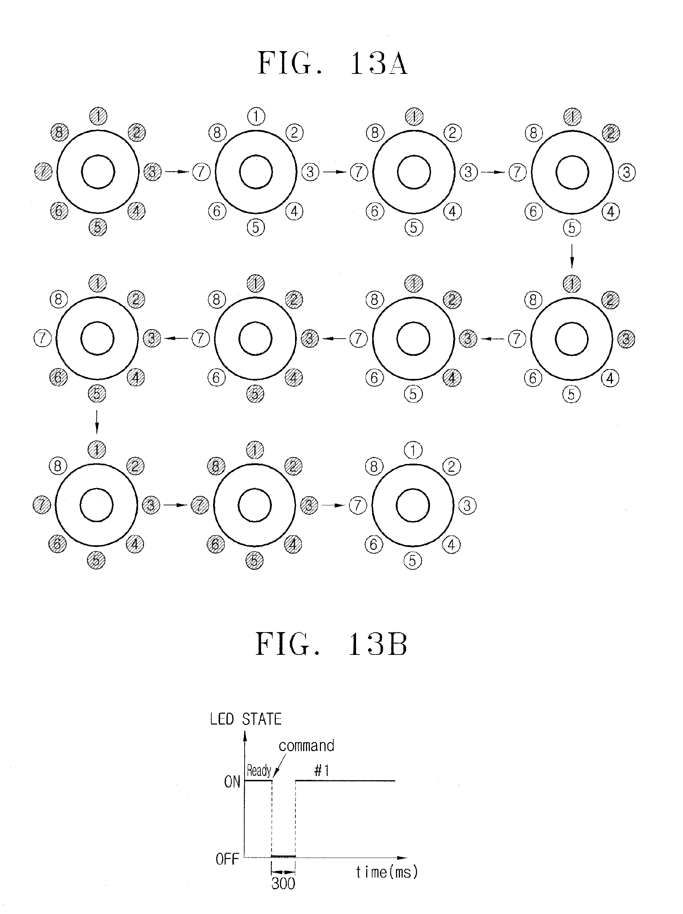

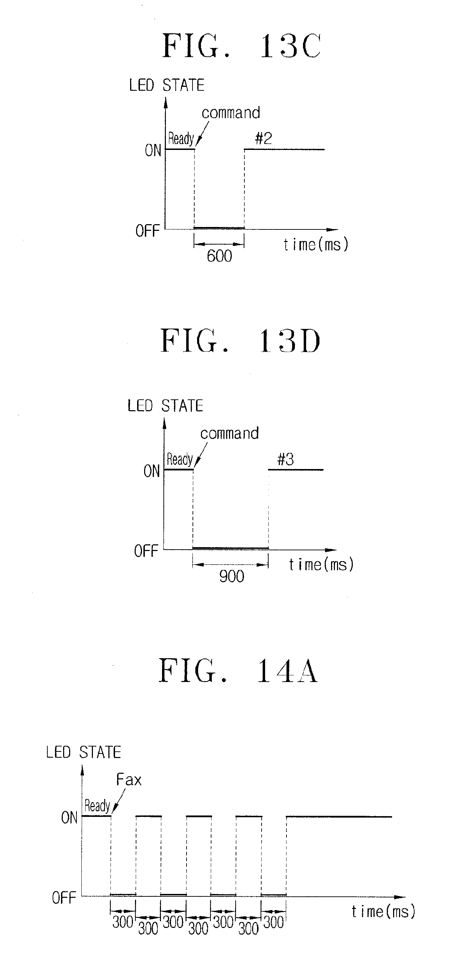

FIGS. 13A to 13D illustrate display patterns of the state indicating unit 130 appearing when the image forming apparatus 100 is in data reception according to a user's command to output.

Referring to FIG. 13A, if eight LEDs are provided, all the eight LEDs are turned off and start to be turned on one by one at a predetermined time interval. Specifically, the LEDs start to be turned on in the order of LED #1, LED #2, ..., LED #8, and if the LED #8 is turned on, all the eight LEDs are turned off. This display pattern repeats until the data reception is finished.

FIGS. 13B to 13D illustrate on/off states of the LEDs #1 to #3 according to an example of the present invention. Specifically, FIGS. 13B to 13D are graphical representations of an example where the LEDs #1 to #3 are turned on at a time interval that corresponds to 300 ms.

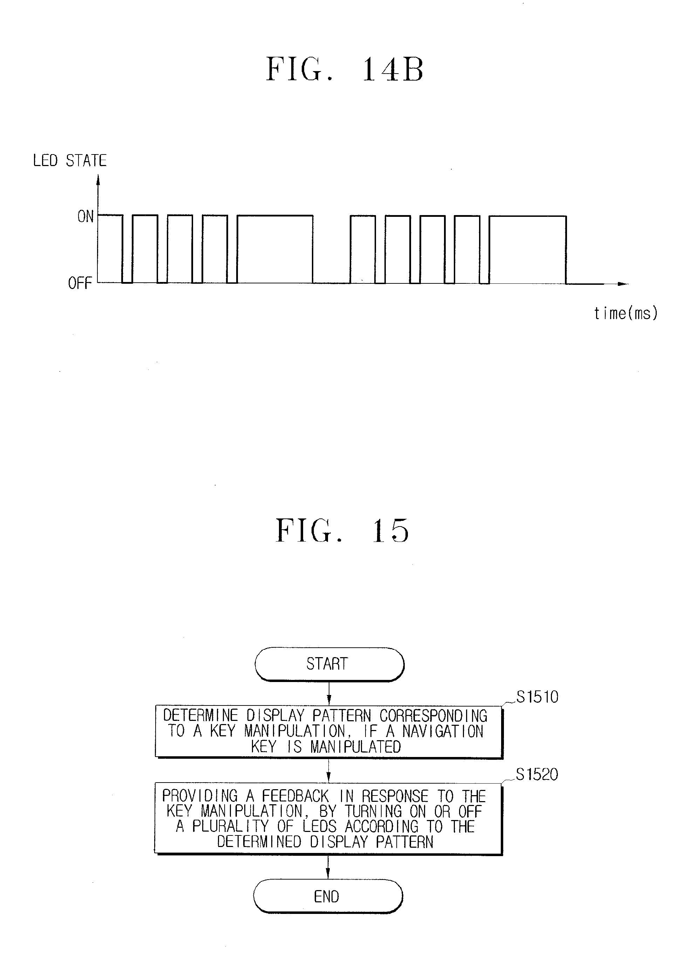

FIGS. 14A and 14B illustrate display patterns of the state indicating unit 130 appearing while the image forming apparatus 100 (FIG. 1) is in facsimile reception.

Referring to FIG. 14A, the LEDs may operate in a display pattern in which all the LEDs repeat turning on and off at predetermined time interval, while the image forming apparatus 100 is receiving a facsimile transmission. Referring to FIG. 14B, the LEDs may operate in a display pattern in which the on and off intervals of the LEDs are varied.

The display patterns explained above are applicable not only when the image forming apparatus 100 is in normal operation, but also in an error or warning state. For example, the image forming apparatus 100 in an error state is still able to receive a facsimile transmission, in which case the LEDs are operated in a predetermined display pattern, in pink colour.

FIG. 15 illustrates a method to provide a feedback in response to a user's manipulation of the image forming apparatus according to an example embodiment of the present invention. The method illustrated in FIG. 15 is applicable to any form of image forming apparatus that includes a rotary navigation key, and a LED module having a plurality of LEDs arranged around the edge of the navigation key.

Referring to FIG. 15, at operation S1510, a display pattern is determined according to a manipulation of the navigation key to turn on at least one LED that corresponds to the rotation range of the navigation key; to turn on and off a plurality of LEDs in sequence; to turn on or off all of a plurality of LEDs concurrently; or to repeat turning on all of a plurality of LEDs concurrently and turning off all of a plurality of LEDs concurrently, in an alternate manner.

At operation S1520, a feedback to the manipulation of the navigation key is provided, by turning on or off a plurality of LEDs according to the determined display pattern.

A display pattern may be determined after checking the state of the image forming apparatus 100 (FIG. 1), that is, according to the state of the image forming apparatus 100 to turn on all of a plurality of LEDs in sequence and to turn off all of a plurality of LEDs in sequence; to turn on all of a plurality of LEDs concurrently; to repeat turning on all of a plurality of LEDs concurrently and turning off all of a plurality of LEDs concurrently, in an alternate fashion; or to vary display colour.

If a push area for a user to press is provided in at least a portion of the navigation key, the display pattern may be determined according to the rotation range of the navigation key, and according to whether the push area is pressed.

Alternatively, a display pattern may be determined, upon pressing the push area of the navigation key, to turn on a LED arranged at a location to correspond to the pressed push area. Alternatively, a display pattern may be determined, upon pressing the push area of the navigation key and concurrently rotating the navigation key, to turn on the LEDs arranged at locations to correspond to the areas the navigation key has passed.

A display pattern may be determined, if a predetermined area of the push area of the navigation key is pressed, to turn on all of a plurality of LEDs in turn and to turn off all of a plurality of LEDs in turn, or to turn on all of a plurality of LEDs concurrently, or to repeat turning on all of a plurality of LEDs concurrently and turning off all of a plurality of LEDs concurrently, in an alternate manner.

The present invention can also be embodied as computer-readable codes on a computer-readable medium. The computer-readable medium can include a computer-readable recording medium and a computer-readable transmission medium. The computer-readable recording medium is any data storage device that can store data that can be thereafter read by a computer system. Examples of the computer-readable recording medium include read-only memory (ROM), random-access memory (RAM), CD-ROMs, magnetic tapes, floppy disks, and optical data storage devices. The computer-readable recording medium can also be distributed over network coupled computer systems so that the computer-readable code is stored and executed in a distributed fashion. The computer-readable transmission medium can transmit carrier waves or signals (e.g., wired or wireless data transmission through the Internet). Also, functional programs, codes, and code segments to accomplish the present invention can be easily construed by programmers skilled in the art to which the present invention pertains.

According to the various example embodiments of the present invention, a display pattern is provided according to a manipulation of a navigation key during menu navigation, thereby providing instant and visual feedback. Accordingly, the user may focus on work product to be produced by an image forming apparatus.

Furthermore, various display patterns are provided according to a manipulation of a navigation key, thereby providing more satisfactory visual feedback.

Although various embodiments of the present invention have been illustrated and described, it will be appreciated by those skilled in the art that changes may be made in these embodiments without departing from the principles of the invention, the scope of which is defined in the appended claims.

## Claims

1. Apparatus comprising:
a navigation key which is selectable and/or rotatable to navigate a menu; and
a state indicating unit around the navigation key, the state indicating unit being arranged to provide a display pattern that corresponds to a manipulation state of the navigation key.

2. Apparatus according to claim 1, further comprising:
a control unit for controlling the state indicating unit according to the manipulation state of the navigation key.

3. Apparatus according to claim 1 or 2, wherein the control unit is arranged to control the state indicating unit to provide feedback in response to the manipulation of the navigation key.

4. Apparatus according to any one of the preceding claims, wherein the control unit is arranged to determine whether a portion of the navigation key is selected and to determine a rotation range of the navigation key, to adjust a menu display state, to determine a display pattern for the state indicating unit, and to control the state indicating unit to operate according to the determined display pattern.

5. Apparatus according to any one of the preceding claims, wherein the state indicating unit comprises:
a plurality of light emitting elements arranged around a periphery of the navigation key.

6. Apparatus according to claim 5, wherein the control unit is arranged to selects a display pattern according to a key selection of the navigation key, or a rotation range of the navigation key, to turn on at least one of the plurality of light emitting elements in accordance with the selection or the rotation range of the navigation key, or to turn on or off the plurality of light emitting elements in sequence in a predetermined direction, or to turn on or off the plurality of light emitting elements concurrently, or to turn on the plurality of light emitting elements concurrently and turn off the plurality of light emitting elements concurrently in an alternate manner.

7. Apparatus according to any one of the preceding claims, wherein the navigation key comprises one or more push areas for a user to press, the push areas being provided on at least a portion of the navigation key, wherein the control unit is arranged to determine a display pattern for the state indicating unit according to a key selection of the navigation key, a rotation range of the navigation key and a pressing of the push area.

8. Apparatus according to claim 5, wherein the control unit is arranged to determine a display pattern for the state indicating unit according to a state of the apparatus, to turn on and off all of the plurality of light emitting elements in sequence, or to turn on the plurality of light emitting elements concurrently, or to repeat turning on the plurality of light emitting elements concurrently and turning off the plurality of light emitting elements concurrently in an alternate manner, or to change a display colour.

9. Apparatus according to claim 8, wherein the state of the image forming apparatus comprises:
at least one of a power on/off state, a ready state, a power save mode, a facsimile transmission/reception state, a data transmission/reception state, a mail transmission/reception state, a printing state, and an error state.

10. An image forming apparatus comprising apparatus according to any one of the preceding claims.

11. A method of providing feedback in response to a user manipulation of an apparatus that includes a navigation key which is selectable and/or rotatable, and a plurality of light emitting elements arranged along an edge of the navigation key, the method comprising:
determining a display pattern to correspond to a key manipulation or a change in the state of the apparatus, if the navigation key is manipulated, or if the state of the image forming apparatus is changed; and
turning the plurality of light emitting elements on or off according to the determined display pattern.

12. The method of claim 11, wherein the display pattern is determined according to the key manipulation, to turn on at least one light emitting element of the plurality of light emitting elements, which is arranged at a location to correspond to the rotation range, or to turn on the light emitting elements in sequence and turn off the light emitting elements in sequence in a predetermined direction, or to turn on or off the light emitting elements concurrently, or to repeat turning on the light emitting elements concurrently and turning off the light emitting elements concurrently in an alternate manner.

13. The method of claim 11 or 12, further comprising:
determining a state of the apparatus; and
determining the display pattern according to the state of the image forming apparatus, to turn on all of the plurality of light emitting elements in sequence and turn off all the light emitting elements in sequence, or to turn on the light emitting elements concurrently, or to repeat turning on the light emitting elements concurrently and turning off the light emitting elements concurrently in an alternate manner, or to change a display colour.

14. The method of claim 11, 12 or 13, wherein the state of the apparatus comprises at least one of a power on/off state, a ready state, a power save mode, a facsimile transmission/reception state, a data transmission/reception state, a mail transmission/reception state, a printing state, and an error state.
